# EUROPEAN PATENT SPECIFICATION

(11) **EP 1 860 873 B1**
(45) Date of publication and mention of the grant of the patent: **14.04.2010**
(21) Application number: 06775479.6
(22) Date of filing: 24.08.2006
(51) Int. Cl.: H04N 5/44

(54) **METHOD, SYSTEM AND RECEIVING TERMINAL FOR BROADCASTING CONTENTS IN DIGITAL BROADCAST**
VERFAHREN, SYSTEM UND EMPFANGSENDGERÄT ZUR UBERTRAGUNG VON INHALTEN BEI DIGITALEM RUNDFUNK
PROCEDE, SYSTEME ET TERMINAL DE RECEPTION POUR CONTENUS DE RADIODIFFUSION DANS UNE RADIODIFFUSION NUMERIQUE

(30) Priority: 24.08.2005 CN 200510096915
(43) Date of publication of application: 28.11.2007
(73) Proprietor: Huawei Technologies Co., Ltd., Longgang District, Shenzhen Guangdong 518129 (CN)
(72) Inventor: LI, Zhibin, Guangdong 518129 (CN); WANG, Shengqiong, Guangdong 518129 (CN)
(74) Representative: Pfenning, Meinig & Partner GbR
(86) International application number: PCT/CN2006/002161
(87) International publication number: WO 2007/022725

(56) References cited:
- WO-A-00/52621
- WO-A-02/054768
- WO-A-03/038674
- CN-A- 1 394 436
- CN-A- 1 565 120
- CN-A- 1 602 626
- US-A1- 2004 194 131
- US-B1- 6 389 593

## Description

### Field of the Invention

This invention relates to the communication field, in particular to a content playing method, system and receiving terminal for the digital broadcast service.

### Background of the Invention

The digital broadcast service is used to provide the public with images, voice, multimedia and data. Information is sent to the public through universal receiving terminals by means of point-to-plane receiving. The receiving terminals receive data sent by content servers in the broadcast network and there is no reverse channel between a receiving terminal and a content server for them to interact.

The digital broadcast service covers a large amount of broadcast contents that are arranged based on a scheduler. With the scheduler, users can know playing contents, broadcast time and broadcast channels. The scheduler includes validity time, content broadcast or receiving time and content playing time, and so on. The scheduler is included in a digital broadcast guide sent by content servers to receiving terminals.

At present, the conflict in broadcast time of programs is not taken into account in arrangement of broadcast contents. A content provider can process contents provided by itself to avoid conflict but cannot control other providers. In addition, a content provider may provide multiple contents at one time. Therefore, conflict in broadcast contents is unavoidable. A user may subscribe to multiple broadcast contents, and it cannot be ensured that the playing time does not conflict. Conflict in broadcast contents may cause a lot of inconvenience to users when they are receiving broadcast. Users can not select to play a content by preference without losing those contents to be played later.

### Summary of the Invention

The embodiment of the invention provides a content playing method for digital broadcast, including: sending, by a content server, a digital broadcast service guide to a receiving terminal, the digital broadcast service guide comprising priorities of broadcast contents; receiving, by the receiving terminal, the digital broadcast service guide; sending, by the content server, the broadcast contents to the receiving terminal; receiving, by the receiving terminal, the broadcast contents; checking, by the receiving terminal, whether a playing conflict occurs to the broadcast contents; and determining, by the receiving terminal, a broadcast content to be played according to priorities of the broadcast contents, when a playing conflict occurs to the broadcast contents.

When the playing conflict occurs to the broadcast contents, determining by the receiving terminal a broadcast content to play according to the priorities further includes: when broadcast contents with a same priority conflict, selecting manually a broadcast content from the conflicting contents to play; when broadcast contents with different priorities conflict, playing the broadcast content with a higher priority from the conflicting contents.

The method further includes: when broadcast contents conflict, storing broadcast contents that are not played from the conflicting contents; after playing the current broadcast content completely, playing the stored broadcast contents if the stored broadcast contents are in a validity period of playing.

The method further includes: when playing the stored broadcast contents after playing the current broadcast content completely, if subsequent data of the stored broadcast contents is being received, continuing to receive and store the subsequent data.

The method further includes: when setting priorities for broadcast contents at a content server, setting whether the priorities can be modified.

The method further includes: when the priority of a broadcast content set at the content server can be modified, adjusting the priority according to a user's requirement before playing.

The embodiment of the invention also provides a content playing system for the digital broadcast service, including a content server, used to send digital broadcast service guide and broadcast contents to a receiving terminal; and the receiving terminal, used to receive the digital broadcast service guide and the broadcast contents sent by the content server and play the broadcast contents locally; the content server is further used to set priorities for broadcast contents which are included in the digital broadcast service guide; the receiving terminal is further used to determine the broadcast content to be played according to the priorities when the a playing conflict occurs to the broadcast contents.

The content server is further used to set whether the priority of a broadcast content can be modified and the setting is included in the digital broadcast service guide.

Further, determining the broadcast content to be played according to the priorities when the playing conflict occurs to the broadcast contents includes: when broadcast contents with a same priority conflict, selecting manually a broadcast content to play from the conflicting broadcast contents; when broadcast contents with different priorities conflict, playing a broadcast content with a higher priority from the conflicting broadcast contents.

The receiving terminal is further used to modify the priorities of broadcast contents whose priorities are allowed to be modified.

The receiving terminal further includes a storage device used to, when a playing conflict occurs to the broadcast contents, store broadcast contents that are not played from the conflicting broadcast contents.

The storage device is further used to store subsequent data of the stored broadcast contents when playing the stored broadcast contents after a current broadcast content is played completely.

The embodiment of the invention also provides a content playing system for the digital broadcast service, including: a content server, used to send a digital broadcast service guide and broadcast contents to a receiving terminal, and set priorities for the broadcast contents, the digital broadcast service guide comprising the priorities of the broadcast contents; and the receiving terminal, used to receive the digital broadcast service guide and the broadcast contents sent by the content server, check whether a playing conflict occurs to the broadcast contents, and determine a broadcast content to be played according to the priorities when a playing conflict occurs to the broadcast contents, and play the broadcast contents locally.

Determining a broadcast content to be played according to the priorities when the playing conflict occurs to the broadcast contents further includes: when broadcast contents with a same priority conflict, selecting a broadcast content to play from the conflicting broadcast contents; when broadcast contents with different priorities conflict, playing a broadcast content with a higher priority from the conflicting broadcast contents.

The receiving terminal further includes a storage device used to, when a playing conflict occurs to the broadcast contents, store broadcast contents that are not played from the conflicting broadcast contents.

The storage device is further used to store received subsequent data of the stored broadcast contents when playing the stored broadcast contents after a broadcast current content is played completely.

The embodiment of the invention also provides a receiving terminal for the digital broadcast service, adapted to receive a digital broadcast service guide and broadcast contents, the digital broadcast service guide comprising priorities of the broadcast contents, check whether a playing conflict occurs to the broadcast contents, and determine a broadcast content to be played according to priorities of the broadcast contents when a playing conflict occurs to the broadcast contents. The receiving terminal is further adapted to set priorities for the broadcast contents.

When broadcast contents conflict during playing, determining a broadcast content to be played according to the priorities further includes: when broadcast contents with a same priority conflict, selecting manually a broadcast content to play from the conflicting broadcast contents; when broadcast contents with different priorities conflict, selecting a broadcast content with a higher priority from the conflicting broadcast contents to play.

The receiving terminal further includes a storage device used to store broadcast contents that are not played from the conflicting broadcast contents when broadcast contents conflict.

The storage device is further used to store received subsequent data of the stored broadcast contents when playing the stored broadcast contents after a current broadcast content is played completely.

### Brief Description of the Drawings

Figure 1 shows the structure of a content playing system for the digital broadcast service according to an embodiment of the invention;

Figure 2 shows the flowchart of setting priorities for broadcast contents according to an embodiment of the invention;

Figure 3 shows the flowchart of processing broadcast contents by the receiving terminal after the receiving terminal receives broadcast contents sent by content servers according to an embodiment of the invention.

### Detailed Descriptions of the Embodiments

It should be understood that the embodiments described below are used to explain the invention instead of limiting the invention.

To solve conflicts of contents in broadcast receiving and playing time for the digital broadcast service, priorities for broadcast contents are set, according to an embodiment of the invention, to ensure receiving and playing of contents with higher priorities in case of broadcast contents conflict.

An embodiment of the invention:

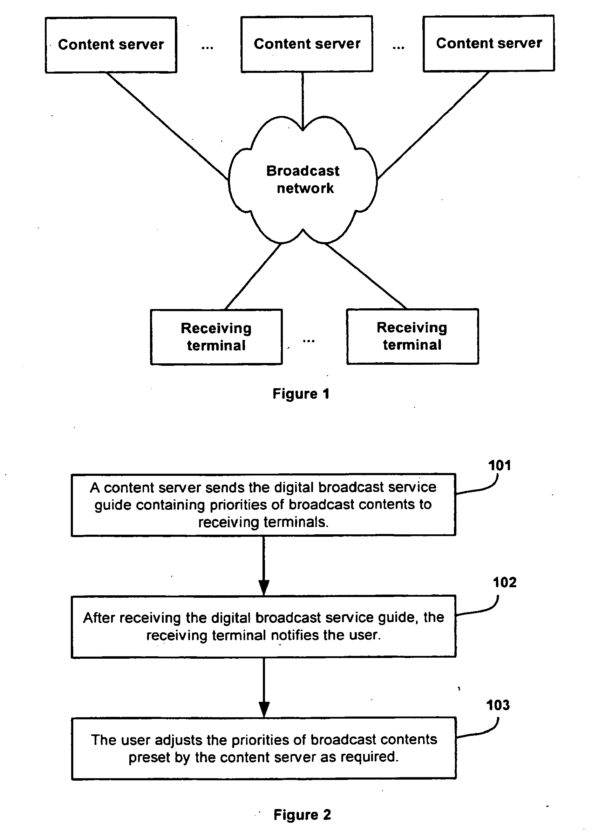

Figure 1 shows the structure of a content playing system for the digital broadcast service according to an embodiment of the invention. The system includes one or more content servers and one ore more receiving terminals.

The content servers release a digital broadcast service guide to the receiving terminals through a broadcast network such as digital video broadcasting network (DVB), mobile network or Internet and send broadcast contents to the receiving terminals by following the digital broadcast service guide. The digital broadcast service guide includes service information and contents in the digital broadcast service, for example, content description, charge for contents on demand and the scheduler that informs users of available programs. It also includes settings of priorities for broadcast contents and of whether priorities may be modified. Content servers may be large or medium servers.

The receiving terminals download and play broadcast contents and may adjust the priorities of broadcast contents. In the case of broadcast contents conflict, receiving terminals determine the contents to be played locally according to the priorities. The receiving terminal further includes a storage device used to store contents that are not played in the case of broadcast contents conflict and to store subsequent data of the stored contents when playing the stored contents after a current content is played completely. The receiving terminal may be a communication terminal that downloads broadcast contents provided by content servers. For example, it may be a mobile phone, a personal computer (PC) or a personal digital assistant (PDA). The storage device may be a storage medium such as built-in random access memory (RAM) and hard disk.

Figure 2 shows the flowchart of setting priorities for broadcast contents according to an embodiment of the invention, including the following steps:

Step 101: A content server sets priorities for broadcast contents according to their originality and popularity, and the setting is included in the digital broadcast service guide. The content server sends the digital broadcast service guide to receiving terminals.

When setting priorities, the content server may also set whether the specified priority of a broadcast content may be modified, which is also included in the digital broadcast service guide.

Step 102: After receiving the digital broadcast service guide, the receiving terminal of digital broadcast obtains the setting of priorities and notifies the user that the digital broadcast service guide has been received.

Step 103: The user adjusts the priorities of broadcast contents set by the content server as required and does not adjust those contents whose priorities are not allowed to be adjusted.

It should be noted that, to ensure users may obtain the latest broadcast contents and their priorities, the content server needs to send the digital broadcast service guide to receiving terminals before sending broadcast contents. The content server may also update the setting of priorities in the service guide and send the service guide to receiving terminals periodically.

Note: In step 101, a field of priorities description may be added to the content description of the digital broadcast service guide to indicate the settings of priorities of broadcast contents and of whether priorities may be modified.

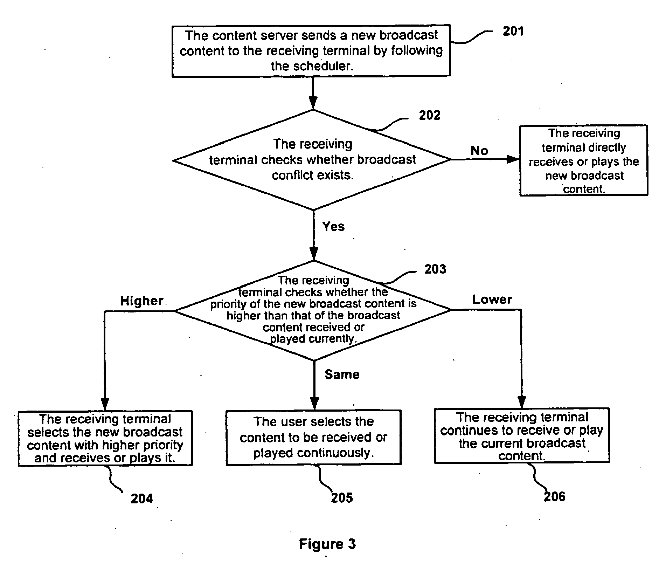

Figure 3 shows the flowchart of processing broadcast contents by a receiving terminal after the terminal receives broadcast contents sent by the content server according to an embodiment of the invention, including the following steps:

Step 201: The content server sends a new broadcast content to the receiving terminal by following the scheduler.

Step 202: After receiving the broadcast content sent by the content server, the receiving terminal checks whether broadcast contents conflict exists. If yes, the process goes to step 203 ; if not, the receiving terminal directly receives or plays the new broadcast content.

Step 203: The receiving terminal checks whether the priority of the new broadcast content is higher than that of the broadcast content received or played currently. If yes, the process goes to step 204; if lower, the process goes to step 206; if the priorities of the two contents are the same, the process goes to step 205.

Step 204: The receiving terminal directly selects the new broadcast content with higher priority to receive or play it.

Step 205: The receiving terminal prompts the user to select which content to process. The content server continues to send the broadcast content selected by the user, and the receiving terminal plays the broadcast content selected by the user.

Step 206: The receiving terminal continues to receive or play the current broadcast content.

In steps 204, 205 and 206, upon receiving a new broadcast content, the receiving terminal may also display a broadcast prompt for the user, notifying the user that a new content needs to be received or played. If the storage capacity permits, the receiving terminal stores the broadcast contents that have not been played. After the selected broadcast content is received or played, the receiving terminal notifies the user to play the stored contents if the stored broadcast contents are within a validity period. When playing the stored contents, the receiving terminal may continue to receive and store subsequent data of the broadcast content interrupted last time if the broadcast content interrupted last time is being received.

The priorities of broadcast contents are set flexibly by content providers in content servers according to the service requirement. For example, priorities may include three levels: high, medium and low, or five levels: highest, high, medium, common and low. The following further describes the functions of priorities in playing according to the above embodiment of the invention.

Priorities include four levels, that is, 0, 1, 2 and 3 from the highest to the lowest.

0: highest priority. In the case of broadcast contents conflict, ensure playing or receiving of contents whose priorities are 0 by preference.

1: second highest priority. If broadcast contents conflict and the contents whose priorities are 0 do not exist, ensure receiving or playing of the contents whose priorities are 1 by preference. If the contents whose priorities are 0 exist and the storage capacity of the receiving terminal is enough, the receiving terminal stores the contents whose priorities are 1 and provides a broadcast prompt to the user. After the contents whose priorities are 0 are played or received completely, if the contents whose priorities are 1 are in the validity period, the receiving terminal starts to play or receive the contents of priority 1.

2: common priority. If broadcast contents conflict and the contents whose priorities are higher than 2 do not exist, ensure receiving or playing of contents whose priorities are 2 by preference. If the contents whose priorities are higher than 2 are being received or played, the receiving terminal provides a broadcast prompt to the user, stops receiving or playing contents of priority 2 and starts to receive or play contents of higher priorities.

3: lowest priority. If broadcast contents conflict and the contents whose priorities are higher than 3 do not exist, ensure receiving or playing of contents whose priorities are 3 by preference. If the contents whose priorities are higher than 3 are being received or played, the receiving terminal stops receiving or playing contents of priority 3 and starts to receive or play contents of higher priorities.

The above embodiment shows that management of broadcast contents by priorities helps to solve broadcast contents conflicts. In addition, if priorities are set for broadcast contents on the content server and the priorities cannot be modified, it is easy for content providers to provide new services. For example, a service provider may provide broadcast contents for free and force users to play advertisements added in the contents.

Another embodiment of the invention:

Similar to the above embodiment, a content playing system for the digital broadcast service includes one ore more content servers and one or more receiving terminals.

The content servers release the digital broadcast service guide to the receiving terminals through a broadcast network such as DVB, mobile network or Internet and send the broadcast contents to the receiving terminals by the digital broadcast service guide. The digital broadcast service guide includes service information and content information of the digital broadcast service, for example, content description, charge for contents on demand and the scheduler informing users of available programs.

The receiving terminals download broadcast contents, set priorities for broadcast contents and play contents locally according to the priorities of the contents. The receiving terminal may further include a storage device used to store contents that are not played in the case of broadcast contents conflict and to store subsequent data of the stored contents when playing the stored contents after a current content is played completely.

After receiving broadcast contents sent by a content server, a receiving terminal plays the contents in the same way as it does in the first embodiment of the invention.

The second embodiment of the invention shows that the system and method may help to solve broadcast contents conflicts by managing the priorities of broadcast contents. Different from the first embodiment, however, a content server cannot manage priorities of some important contents in this embodiment. As a result, the content server cannot realize specified broadcast services. For example, it cannot force users to play advertisements added in broadcast contents during playing of free contents.

In the embodiments of the invention, contents include various broadcast contents, programs and services provided by content servers. Playing includes receiving, downloading or playing of broadcast contents.

Although the invention has been described through some preferred embodiments, the invention is not limited to such embodiments. It is intended that any change, equivalent replacement or improvement within the spirit and principle of the invention be included in the scope of protection of the invention.

## Claims

1. A content playing method for digital broadcast service, comprising:
sending, by a content server, a digital broadcast service guide to a receiving terminal, the digital broadcast service guide comprising priorities of broadcast contents, wherein the priorities of the broadcast contents are set by the content server;
receiving, by the receiving terminal, the digital broadcast service guide;
sending, by the content server, the broadcast contents to the receiving terminal;
receiving, by the receiving terminal, the broadcast contents;
checking, by the receiving terminal, whether a playing conflict occurs to the broadcast contents; and
determining, by the receiving terminal, a broadcast content to be played according to the priorities of the broadcast contents, when a playing conflict occurs to the broadcast contents.

2. The method of claim 1, wherein when the playing conflict occurs to the broadcast contents, determining by the receiving terminal the broadcast content to be played according to the priorities further comprises:
when broadcast contents with a same priority conflict, selecting manually a broadcast content from the conflicting contents to play;
when broadcast contents with different priorities conflict, playing the broadcast content with a higher priority from the conflicting contents.

3. The method of claim 1, further comprising:
when broadcast contents conflict, storing broadcast contents that are not played from the conflicting contents;
after playing the current broadcast content completely, playing the stored broadcast contents if the stored broadcast contents are in a validity period of playing.

4. The method of claim 3, further comprising, when playing the stored broadcast contents after playing the current broadcast content completely, if subsequent data of the stored broadcast contents is being received, continuing to receive and store the subsequent data.

5. The method of claim 1, further comprising, when setting the priorities for the broadcast contents at the content server, setting whether the priorities can be modified.

6. The method of claim 5, wherein when the priority of a broadcast content set at the content server can be modified, the priority is adjusted at the receiving terminal according to a user's requirement before playing.

7. A content playing system for digital broadcast service, comprising
a content server, used to send a digital broadcast service guide and broadcast contents to a receiving terminal, and set priorities for the broadcast contents, the digital broadcast service guide comprising the priorities of the broadcast contents; and
the receiving terminal, used to receive the digital broadcast service guide and the broadcast contents sent by the content server check whether a playing conflict occurs to the broadcast contents, and determine a broadcast content to be played according to the priorities when a playing conflict occurs to the broadcast contents, and play the broadcast contents locally.

8. The system of claim 7, wherein the content server is further used to set whether the priority of a broadcast content can be modified and the setting is included in the digital broadcast service guide.

9. The system of claim 7, wherein determining the broadcast content to be played according to the priorities when the playing conflict occurs to the broadcast contents comprises:
when broadcast contents with a same priority conflict, selecting manually a broadcast content to play from the conflicting broadcast contents;
when broadcast contents with different priorities conflict, playing a broadcast content with a higher priority from the conflicting broadcast contents.

10. The system of claim 7, wherein the receiving terminal is further used to modify the priorities of broadcast contents whose priorities are allowed to be modified.

11. The system of claim 7, wherein the receiving terminal further comprises a storage device used to, when the playing conflict occurs to the broadcast contents, store broadcast contents that are not played from the conflicting broadcast contents.

12. The system of claim 11, wherein the storage device is further used to store subsequent data of the stored broadcast contents when playing the stored broadcast contents after a current broadcast content is played completely.

13. A receiving terminal for digital broadcast service, adapted to receive a digital broadcast service guide and broadcast contents, the digital broadcast service guide comprising priorities of the broadcast contents, check whether a playing conflict occurs to the broadcast contents, and determine a broadcast content to be played according to priorities of the broadcast contents when a playing conflict occurs to the broadcast contents.

14. The receiving terminal of claim 13, wherein the receiving terminal is further adapted to set priorities for the broadcast contents.

15. The receiving terminal of claim 13, wherein determining the broadcast content to be played according to the priorities when the playing conflict occurs to the broadcast contents further comprises:
when broadcast contents with a same priority conflict, selecting manually a broadcast content to play from the conflicting broadcast contents;
when broadcast contents with different priorities conflict, selecting a broadcast content with a higher priority from the conflicting broadcast contents to play.

16. The receiving terminal of claim 13, further comprising a storage device used to store broadcast contents that are not played from the conflicting broadcast contents when broadcast contents conflict.

17. The receiving terminal of claim 16, wherein the storage device is further used to store received subsequent data of the stored broadcast contents when playing the stored broadcast contents after a current broadcast content is played completely.

## Patentansprüche

1. Inhaltswiedergabeverfahren für Digitalrundfunkdienst, mit den folgenden Schritten:
ein Inhaltsserver sendet eine Digitalrundfunk-Dienstanleitung zu einem Empfangsendgerät, wobei die Digitalrundfunk-Dienstanleitung Prioritäten von Rundfunkinhalten umfasst, wobei die Prioritäten der Rundfunkinhalte durch den Inhaltsserver eingestellt werden;
das Empfangsendgerät empfängt die Digitalrundfunk-Dienstanleitung;
der Inhaltserver sendet die Rundfunkinhalte zu dem Empfangsendgerät;
das Empfangsendgerät empfängt die Rundfunkinhalte;
das Empfangsendgerät überprüft, ob ein Wiedergabekonflikt an den Rundfunkinhalten auftritt; und
das Empfangsendgerät bestimmt einen wiederzugebenden Rundfunkinhalt gemäß den Prioritäten der Rundfunkinhalte, wenn ein Wiedergabekonflikt an den Rundfunkinhalten auftritt.

2. Verfahren nach Anspruch 1, wobei, wenn der Wiedergabekonflikt an den Rundfunkinhalten auftritt, das Bestimmen des wiederzugebenden Rundfunkinhalts gemäß den Prioritäten durch das Empfangsendgerät ferner Folgendes umfasst:
wenn Rundfunkinhalte mit einer selben Priorität in Konflikt stehen, manuelles Auswählen eines Rundfunkinhalts von den in Konflikt stehenden wiederzugebenden Inhalten;
wenn Rundfunkinhalte mit verschiedenen Prioritäten in Konflikt stehen, Wiedergeben des Rundfunkinhalts mit einer höheren Priorität von den in Konflikt stehenden Inhalten.

3. Verfahren nach Anspruch 1, ferner mit den folgenden Schritten:
wenn Rundfunkinhalte in Konflikt stehen, Speichern von Rundfunkinhalten, die nicht wiedergegeben werden, von den in Konflikt stehenden Inhalten;
nachdem der aktuelle Rundfunkinhalt vollständig wiedergegeben wurde, Wiedergeben der gespeicherten Rundfunkinhalte, wenn sich die gespeicherten Rundfunkinhalte in einer Validitätsperiode der Wiedergabe befinden.

4. Verfahren nach Anspruch 3, ferner mit dem folgenden Schritt: wenn beim Wiedergeben der gespeicherten Rundfunkinhalte nach dem vollständigen Wiedergeben des aktuellen Rundfunkinhalts nachfolgende Daten der gespeicherten Rundfunkinhalte empfangen werden, Weiterempfangen und -speichern der nachfolgenden Daten.

5. Verfahren nach Anspruch 1, bei dem ferner beim Einstellen der Prioritäten für die Rundfunkinhalte in dem Inhaltsserver eingestellt wird, ob die Prioritäten modifiziert werden können.

6. Verfahren nach Anspruch 5, wobei, wenn die in dem Inhaltsserver eingestellte Priorität eines Rundfunkinhalts modifiziert werden kann, die Priorität in dem Empfangsendgerät vor der Wiedergabe gemäß den Anforderungen eines Benutzers justiert wird.

7. Inhaltswiedergabesystem für Digitalrundfunkdienst, umfassend:
einen Inhaltsserver, mit dem eine Digitalrundfunk-Dienstanleitung und Rundfunkinhalte zu einem Empfangsendgerät gesendet und Prioritäten für die Rundfunkinhalte eingestellt werden, wobei die Digitalrundfunk-Dienstanleitung die Prioritäten der Rundfunkinhalte umfasst; und
das Empfangsendgerät, mit dem die Digitalrundfunk-Dienstanleitung und die Rundfunkinhalte, die durch den Inhaltsserver gesendet werden, empfangen werden und überprüft wird, ob ein Wiedergabekonflikt an den Rundfunkinhalten auftritt und ein wiederzugebender Rundfunkinhalt gemäß den Prioritäten bestimmt wird, wenn ein Wiedergabekonflikt an den Rundfunkinhalten auftritt, und die Rundfunkinhalte lokal wiedergegeben werden.

8. System nach Anspruch 7, wobei der Inhaltsserver ferner dazu verwendet wird einzustellen, ob die Priorität eines Rundfunkinhalts modifiziert werden kann, und die Einstellung in der Digitalrundfunk-Dienstanleitung enthalten ist.

9. System nach Anspruch 7, wobei das Bestimmen des wiederzugebenden Rundfunkinhalts gemäß den Prioritäten, wenn der Wiedergabekonflikt an den Rundfunkinhalten auftritt, Folgendes umfasst:
wenn Rundfunkinhalte mit einer selben Priorität in Konflikt stehen, manuelles Auswählen eines Rundfunkinhalts von den in Konflikt stehenden wiederzugebenden Inhalten;
wenn Rundfunkinhalte mit verschiedenen Prioritäten in Konflikt stehen, Wiedergeben des Rundfunkinhalts mit einer höheren Priorität von den in Konflikt stehenden Inhalten.

10. System nach Anspruch 7, wobei das Empfangsendgerät ferner dazu verwendet wird, die Prioritäten von Rundfunkinhalten, deren Prioritäten modifiziert werden dürfen, zu modifizieren.

11. System nach Anspruch 7, wobei das Empfangsendgerät ferner eine Speichereinrichtung umfasst, mit der, wenn der Wiedergabekonflikt an den Rundfunkinhalten auftritt, Rundfunkinhalte, die nicht wiedergegeben werden, von den in Konflikt stehenden Rundfunkinhalten gespeichert werden.

12. System nach Anspruch 11, wobei die Speichereinrichtung ferner dazu verwendet wird, nachfolgende Daten der gespeicherten Rundfunkinhalte zu speichern, wenn die gespeicherten Rundfunkinhalte wiedergegeben werden, nachdem ein aktueller Rundfunkinhalt vollständig wiedergegeben wurde.

13. Empfangsendgerät für Digitalrundfunkdienst, das dafür ausgelegt ist, eine Digitalrundfunk-Dienstanleitung und Rundfunkinhalte zu empfangen, wobei die Digitalrundfunk-Dienstanleitung Prioritäten der Rundfunkinhalte umfasst, zu überprüfen, ob ein Wiedergabekonflikt an den Rundfunkinhalten auftritt, und einen wiederzugebenden Rundfunkinhalt gemäß Prioritäten der Rundfunkinhalte zu bestimmen, wenn ein Wiedergabekonflikt an den Rundfunkinhalten auftritt.

14. Empfangsendgerät nach Anspruch 13, wobei das Empfangsendgerät ferner dafür ausgelegt ist, Prioritäten für die Rundfunkinhalte einzustellen.

15. Empfangsendgerät nach Anspruch 13, wobei das Bestimmen des wiederzugebenden Rundfunkinhalts gemäß den Prioritäten, wenn der Wiedergabekonflikt an den Rundfunkinhalten auftritt, ferner Folgendes umfasst:
wenn Rundfunkinhalte mit einer selben Priorität in Konflikt stehen, manuelles Auswählen eines Rundfunkinhalts von den in Konflikt stehenden wiederzugebenden Inhalten;
wenn Rundfunkinhalte mit verschiedenen Prioritäten in Konflikt stehen, Auswählen eines Rundfunkinhalts mit einer höheren Priorität von den in Konflikt stehenden wiederzugebenden Inhalten.

16. Empfangsendgerät nach Anspruch 13, ferner mit einer Speichereinrichtung, mit der Rundfunkinhalte, die nicht wiedergegeben werden, von den in Konflikt stehenden Rundfunkinhalten gespeichert werden, wenn Rundfunkinhalte im Konflikt stehen.

17. Empfangsendgerät nach Anspruch 16, wobei die Speichereinrichtung ferner dazu verwendet wird, empfangene nachfolgende Daten der gespeicherten Rundfunkinhalte beim Wiedergeben der gespeicherten Rundfunkinhalte zu speichern, nachdem ein aktueller Rundfunkinhalt vollständig wiedergeben wurde.

## Revendications

1. Procédé de reproduction de contenus pour service de diffusion numérique, comprenant :
l'envoi, par un serveur de contenus, d'un guide de service de diffusion numérique à un terminal récepteur, le guide de service de diffusion numérique comprenant des priorités de contenus de diffusion, dans lequel les priorités des contenus de diffusion sont établies par le serveur de contenus ;
la réception, par le terminal récepteur, du guide de service de diffusion numérique ;
l'envoi, par le serveur de contenus, des contenus de diffusion au terminal récepteur ;
la réception, par le terminal récepteur, des contenus de diffusion ;
la vérification, par le terminal récepteur, si un conflit de reproduction se produit ou non avec les contenus de diffusion ; et
la détermination, par le terminal récepteur, d'un contenu de diffusion à reproduire en fonction des priorités des contenus de diffusion, quand un conflit de reproduction se produit avec les contenus de diffusion.

2. Procédé selon la revendication 1, dans lequel quand le conflit de reproduction se produit avec les contenus de diffusion, la détermination par le terminal récepteur du contenu de diffusion à reproduire en fonction des priorités comprend en outre :
en cas de conflit entre des contenus de diffusion de même priorité, la sélection manuelle parmi les contenus conflictuels d'un contenu de diffusion à reproduire ;
en cas de conflit entre des contenus de diffusion de priorités différentes, la reproduction du contenu de diffusion ayant une priorité supérieure parmi les contenus conflictuels.

3. Procédé selon la revendication 1, comprenant en outre :
en cas de conflit entre des contenus de diffusion, la mémorisation des contenus de diffusion qui ne sont pas reproduits à partir des contenus conflictuels ;
après la reproduction complète du contenu de diffusion courant, la reproduction des contenus de diffusion mémorisés si les contenus de diffusion mémorisés figurent dans une période valable de reproduction.

4. Procédé selon la revendication 3, comprenant en outre, lors de la reproduction des contenus de diffusion mémorisés après la reproduction complète du contenu de diffusion courant, si des données ultérieures des contenus de diffusion mémorisés sont reçues, la continuation de la réception et de la mémorisation des données ultérieures.

5. Procédé selon la revendication 1, comprenant en outre, lors de l'établissement des priorités des contenus de diffusion au niveau du serveur de contenus, l'étape d'établir si les priorités peuvent être modifiées ou non.

6. Procédé selon la revendication 5, dans lequel quand la priorité d'un contenu de diffusion établi au niveau du serveur de contenus peut être modifiée, la priorité est réglée au niveau du terminal récepteur en fonction de l'exigence d'un utilisateur avant la reproduction.

7. Système de reproduction de contenu pour service de diffusion numérique, comprenant :
un serveur de contenus, servant à envoyer un guide de service de diffusion numérique et des contenus de diffusion à un terminal récepteur, et établir des priorités des contenus de diffusion, le guide de service de diffusion numérique comprenant les priorités des contenus de diffusion , et
le terminal récepteur, servant à recevoir le guide de service de diffusion numérique et les contenus de diffusion envoyés par le serveur de contenus, vérifier si un conflit de reproduction se produit avec les contenus de diffusion, et déterminer un contenu de diffusion à reproduire en fonction des priorités quand un conflit de reproduction se produit avec les contenus de diffusion, et reproduire localement les contenus de diffusion.

8. Système selon la revendication 7, dans lequel le serveur de contenus est utilisé en outre pour établir si la priorité d'un contenu de diffusion peut être modifiée ou non et l'établissement est inclus dans le guide de service de diffusion numérique.

9. Système selon la revendication 7, dans lequel la détermination du contenu de diffusion à reproduire en fonction des priorités quand le conflit de reproduction se produit avec les contenus de diffusion comprend :
en cas de conflit entre des contenus de diffusion de même priorité, la sélection manuelle parmi les contenus conflictuels de diffusion d'un contenu de diffusion à reproduire ;
en cas de conflit entre des contenus de diffusion de priorités différentes, la reproduction du contenu de diffusion ayant une priorité supérieure à partir des contenus de diffusion conflictuels.

10. Système selon la revendication 7, dans lequel le terminal récepteur sert en outre à modifier les priorités des contenus de diffusion dont les priorités peuvent être modifiées.

11. Système selon la revendication 7, dans lequel le terminal récepteur comprend en outre un dispositif de mémorisation qui est utilisé, quand le conflit de reproduction se produit avec les contenus de diffusion, pour mémoriser les contenus de diffusion qui ne sont pas reproduits à partir des contenus de diffusion conflictuels.

12. Système selon la revendication 11, dans lequel le dispositif de mémorisation est en outre utilisé pour mémoriser des données ultérieures des contenus de diffusion mémorisés lors de la reproduction des contenus de diffusion mémorisés après la reproduction complète d'un contenu de diffusion courant.

13. Terminal récepteur d'un service de diffusion numérique, adapté pour recevoir un guide de service de diffusion numérique et des contenus de diffusion, le guide de service de diffusion numérique comprenant des priorités des contenus de diffusion, vérifier si un conflit de reproduction se produit ou non avec les contenus de diffusion, et déterminer un contenu de diffusion à reproduire en fonction des priorités des contenus de diffusion, quand un conflit de reproduction se produit avec les contenus de diffusion.

14. Terminal récepteur selon la revendication 13, dans lequel le terminal récepteur est en outre adapté pour établir des priorités des contenus de diffusion.

15. Terminal récepteur selon la revendication 13, dans lequel la détermination du contenu de diffusion à reproduire en fonction des priorités quand le conflit de reproduction se produit avec les contenus de diffusion comprend en outre :
en cas de conflit entre des contenus de diffusion de même priorité, la sélection manuelle parmi les contenus de diffusion conflictuels d'un contenu de diffusion à reproduire ;
en cas de conflit entre des contenus de diffusion de priorités différentes, la sélection d'un contenu de diffusion ayant une priorité supérieure parmi les contenus de diffusion conflictuels à reproduire.

16. Terminal récepteur selon la revendication 13, comprenant en outre un dispositif de mémorisation qui est utilisé pour mémoriser les contenus de diffusion qui ne sont pas reproduits à partir des contenus de diffusion conflictuels en cas de conflit avec des contenus de diffusion.

17. Terminal récepteur selon la revendication 16, dans lequel le dispositif de mémorisation est utilisé en outre pour mémoriser des données ultérieures reçues des contenus de diffusion mémorisés lors de la reproduction des contenus de diffusion mémorisés après la reproduction complète d'un contenu de diffusion courant.
